# EUROPEAN PATENT APPLICATION

(11) **EP 1 108 593 A2**
(43) Date of publication of application: **20.06.2001**
(21) Application number: 00204505.2
(22) Date of filing: 14.12.2000
(51) Int. Cl.: B60K 15/03

(54) **Fuel permeation barrier fuel tank**

(30) Priority: 18.12.1999 US 172568; 01.09.2000 US 654014
(71) Applicant: Delphi Technologies, Inc., Troy, MI 48007 (US)
(72) Inventor: Abu-Isa, Ismat A., Rochester Hills, MI 48309 (US)
(74) Representative: Denton, Michael John

(57) **Abstract**

A fuel permeation barrier fuel tank (10) for a vehicle includes a tank shell (12) having a wall formed from a plurality of layers (30,32,34,36,38,40). The layers (30,32,34,36,38,40) include at least an inner layer (30), an outer layer (40) and a fuel permeation barrier layer (34) disposed between the inner layer (30) and the outer layer (40).

## Description

### TECHNICAL FIELD

The present invention relates generally to fuel tanks for vehicles and, more particularly, to a fuel permeation barrier fuel tank for a vehicle.

### BACKGROUND OF THE INVENTION

It is known to provide a fuel tank such as a plastic fuel tank in a vehicle to hold fuel to be used by an engine of the vehicle. In some vehicles, the plastic fuel tank has a fuel permeation barrier made of an ethylene vinyl alcohol (EVOH) copolymer. While EVOH is effective against permeation of pure hydrocarbon fuels, it has a high permeability when used with alcohol containing fuels.

One commercial approach to resolve this concern regarding permeation is to thicken the walls of the fuel tank, which increases the weight, cost and reduces fuel capacity of the fuel tank. However, it is desirable to provide a fuel tank for a vehicle that has a more effective fuel permeation barrier to prevent evaporative emissions. It is also desirable to provide a fuel permeation barrier fuel tank for a vehicle that significantly reduces evaporative emissions and cost of the fuel tank.

### SUMMARY OF THE INVENTION

It is, therefore, one object of the present invention to provide a new fuel permeation barrier fuel tank for a vehicle.

It is another object of the present invention to provide a fuel tank that significantly reduces evaporative emissions and cost in comparison to EVOH plastic tanks.

To achieve the foregoing objects, the present invention is a fuel permeation barrier fuel tank for a vehicle including a tank shell having a wall formed from a plurality of layers. The layers include at least an inner layer, an outer layer and a fuel permeation barrier layer between the inner layer and the outer layer and being made of a polyethylene terephthalate (PET) material.

One advantage of the present invention is that a fuel permeation barrier fuel tank is provided for a vehicle that has a more effective fuel permeation barrier leading to less evaporative emissions. Another advantage of the present invention is that the fuel permeation barrier fuel tank uses polyethylene terephthalate (PET) as the material for the barrier layer, which is much less expensive than EVOH, resulting in cost savings of the fuel tank. Yet another advantage of the present invention is that the fuel permeation barrier fuel tank significantly improves barrier properties and lowers cost of the fuel tank.

Other objects, features, and advantages of the present invention will be readily appreciated, as the same becomes better understood, after reading the subsequent description taken in conjunction with the accompanying drawings.

### BRIEF DESCRIPTION OF THE DRAWINGS

Figure 1 is a perspective view of a fuel permeation barrier fuel tank, according to the present invention.

Figure 2 is a sectional view taken along line 2-2 of Figure 1.

Figure 3 is a table of material properties before and after exposure to fuels at 40^{º}C.

### DESCRIPTION OF THE PREFERRED EMBODIMENT

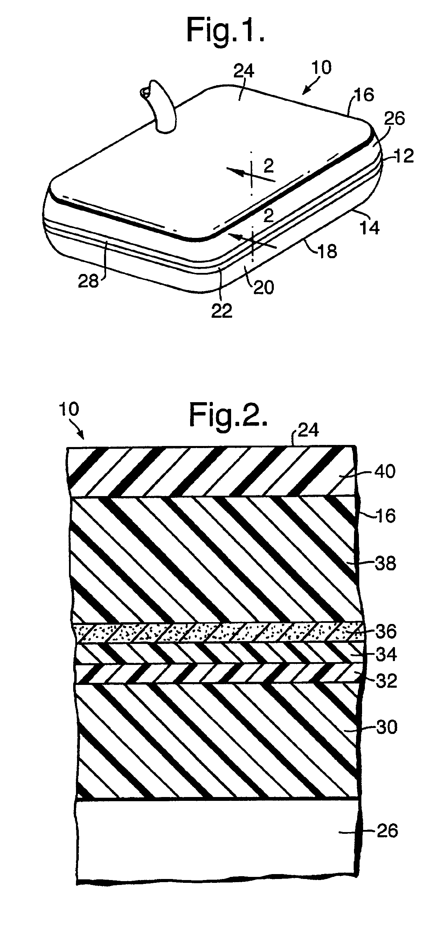

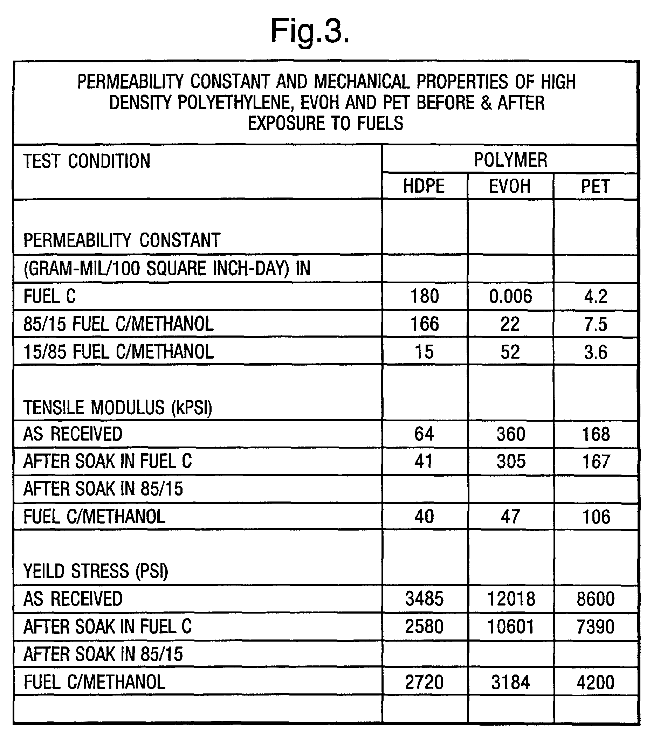

Referring to the drawings and in particular Figures 1 and 2, one embodiment of a fuel permeation barrier fuel tank 10, according to the present invention, is shown for a vehicle (not shown). The fuel permeation barrier fuel tank 10 includes a tank shell 12. In the embodiment illustrated, the tank shell 12 is of a generally rectangular type. The tank shell 12 includes a first or lower half shell 14 and a second or upper half shell 16. The lower half shell 14 has a base wall 18 and a side wall 20 around a periphery of the base wall 18 and extending generally perpendicular thereto. The side wall 20 has a flange 22 extending outwardly and generally perpendicular thereto. The upper half shell 16 has a base wall 24 and a side wall 26 around a periphery of the base wall 24 and extending generally perpendicular thereto. The side wall 26 has a flange 28 extending outwardly and generally perpendicular thereto. The flanges 22 and 28 of the lower half shell 14 and upper half shell 16, respectively, are joined together to form a seam by suitable means such as by thermoforming, compression molding or friction welding. The lower half shell 14 and upper half shell 16 are made of a rigid material such as thermoformable plastic.

Referring to Figures 1 and 2, the fuel permeation barrier fuel tank 10 has the base walls 18,24, side walls 20,26, and flanges 22,28 formed from a plurality of layers 30,32,34,36,38,40. The first or inner layer 30 is made from a thermoformable polymer such as a high density polyethylene (HDPE) or similar polyolefin, which is a conventional material known in the art. The first layer 30 has a predetermined thickness of approximately two millimeters (2.00 mm). The first layer 30 also has a predetermined percentage of the material weight such as approximately 42%. The second layer 32 is made from an adhesive such as maleated polyethylene (ADMER Grade GT6A), which is a conventional material known in the art. The second layer 32 has a predetermined thickness of approximately 0.07 mm. The second layer 32 also has a predetermined percentage of the material weight such as approximately 1.5%. The third layer 34 is a barrier layer made from a polyethylene terephthalate (PET), which is a conventional material known in the art. The third layer 34 has a predetermined thickness of approximately 0.11 mm. The third layer 34 also has a predetermined percentage of the material weight such as approximately 3.0%. The fourth layer 36 is made from an adhesive such as maleated polyethylene (ADMER Grade GT6A), which is a conventional material known in the art. The fourth layer 36 has a predetermined thickness of approximately 0.07 mm. The fourth layer 36 also has a predetermined percentage of the material weight such as approximately 1.5%. The fifth layer 38 is made from a one hundred percent (100%) regrind of a high density polyethylene (HDPE), which is a conventional material known in the art. The fifth layer 38 has a predetermined thickness of approximately 1.5 mm. The fifth layer 38 also has a predetermined percentage of the material weight such as approximately 32%. The sixth or outer layer 40 is made from a thermoformable polymer such as a high density polyethylene (HDPE) or similar polyolefin, which is a conventional material known in the art. The sixth layer 40 has a predetermined thickness of approximately one millimeter (1.00 mm). The sixth layer 40 also has a predetermined percentage of the material weight such as approximately 20%. It should be appreciated that the layers 30,32,34,36,38,40 have a total thickness of approximately 4.75 mm.

In manufacturing the fuel permeation barrier fuel tank 10, several conventional processes may be used. Preferably, the fuel permeation barrier fuel tank 10 is formed by a conventional thermoforming process wherein the layers 30,32,34,36,38,40 can be thermoformed as a coextruded sheet by heat and pressure. In another embodiment, the fuel permeation barrier fuel tank 10 is formed by a conventional extrusion process wherein the third layer 34 is extruded as a separate layer that can be incorporated into the multi-layer structure. It should be appreciated that two fuel barrier layers may be used for enhanced permeation barrier properties by using PET as a second barrier to retard methanol permeation and use EVOH as the first barrier to retard hydrocarbon fuel permeation in the fuel tank 10.

Referring to Figure 3, a table of permeability constant and mechanical properties of HDPE, EVOH, and PET before and after exposure to fuels is shown. The table shows permeation properties and loss of mechanical properties when HDPE and EVOH is exposed to various fuels, and compares the effects to those experienced by the barrier material PET. The permeability of EVOH to pure hydrocarbon is extremely low. For this fuel, EVOH is one of the most effective barriers. However, when alcohol is introduced into the fuel, the permeability of EVOH is compromised as illustrated in the table. Permeability constant of EVOH in pure gasoline is 0.006 g-mil/100 sq. in-day. In fuels containing 15% and 85% methanol, the permeability constant jumps to 22 and 52 g-mil/100 sq. in-day, respectively. In addition, the tensile modulus of EVOH drops from a value of 360 for as received sample to 47 kPSI after exposure to the fuel/methanol blend. Also, 74% of the yield strength of EVOH drops is lost after exposure to 85/15 Fuel C/methanol blend.

As illustrated in the table in Figure 3, the PET has a permeability constant of 7.5 in a fuel containing 15% methanol. Its tensile modulus drops from a value of 168 (kPSI) to 106 (kPSI) after exposure to 85/15 Fuel C/methanol blend. It should be appreciated that a similar trend is also observed for the yield strength of PET, which drops only to 51% of its original value after exposure to 85/15 Fuel C/methanol blend.

Accordingly, PET is a very effective material for preventing permeation of hydrocarbon fuels and fuels containing alcohol. This makes the use of PET a good substitute for EVOH. The PET provides acceptable permeation barrier characteristics when used in a fuel tank containing pure hydrocarbon fuels and is superior to EVOH in fuels containing alcohol. However, PET and EVOH can both be used as fuel barrier layers in a multi-layer plastic fuel tank to minimize permeation of hydrocarbon fuels and methanol containing fuels.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A fuel permeation barrier fuel tank (10) for a vehicle comprising:
a tank shell (12) having a wall formed from a plurality of layers (30,32,34,36,38,40);
said layers (30,32,34,36,38,40) comprising at least an inner layer (30), an outer layer (40) and a fuel permeation barrier layer (34) disposed between said inner layer (30) and said outer layer (40) and being made of a polyethylene terephalate (PET) material.

2. A fuel permeation barrier fuel tank (10) as set forth in claim 1 wherein said inner layer (30) and said outer layer (40) are made of a polyethylene material.

3. A fuel permeation barrier fuel tank (10) as set forth in claim 2 wherein said polyethylene material is a high density polyethylene.

4. A fuel permeation barrier fuel tank (10) as set forth in claim 1 including a regrind layer (38) disposed between said inner layer (30) and said outer layer (40) and being made of a regrind material.

5. A fuel permeation barrier fuel tank (10) as set forth in claim 4 including a first adhesive layer (32) disposed between said regrind layer (38) and said inner layer (30).

6. A fuel permeation barrier fuel tank (10) as set forth in claim 5 including an EVOH layer disposed between said first adhesive layer (32) and said regrind layer (38).

7. A fuel permeation barrier fuel tank (10) as set forth in claim 5 including a second adhesive layer (36) disposed between said regrind layer (38) and said fuel permeation barrier layer (34).

8. A fuel permeation barrier fuel tank (10) as set forth in claim 7 wherein said first adhesive layer (32) is disposed between said fuel permeation barrier layer (34) and said inner layer (30).

9. A fuel permeation barrier fuel tank (10) as set forth in claim 1 wherein said fuel permeation barrier layer (34) has a thickness of approximately 0.1 millimeter.

10. A fuel permeation barrier fuel tank (10) as set forth in claim 1 wherein said fuel permeation barrier layer (34) has a weight percent of approximately 3.0.

11. A fuel permeation barrier fuel tank (10) as set forth in claim 1 wherein said outer layer (40) has a thickness less than said inner layer (30).

12. A fuel permeation barrier fuel tank (10) for a vehicle comprising:
a tank shell (12) having a wall formed from a plurality of layers (30,32,34,36,38,40);
said layers (30,32,34,36,38,40) comprising at least an inner layer (30) and an outer layer (40) made of a thermoformable polymer; and
a fuel permeation barrier layer (34) disposed between said inner layer (30) and said outer layer (40) and being made of a polyethylene terephtphlate material.

13. A fuel permeation barrier fuel tank (10) as set forth in claim 12 including an EVOH layer disposed between said fuel permeation barrier layer (34) and said outer layer (40).

14. A fuel permeation barrier fuel tank (10) as set forth in claim 12 wherein said thermoformable polymer is either one of a polyethylene material and polyolefin material.

15. A fuel permeation barrier fuel tank (10) as set forth in claim 12 including a regrind layer (38) disposed between said inner layer (30) and said outer layer (40) and being made of a regrind material.

16. A fuel permeation barrier fuel tank (10) as set forth in claim 15 including a first adhesive layer (32) disposed between said regrind layer (38) and said inner layer (30).

17. A fuel permeation barrier fuel tank (10) as set forth in claim 16 wherein said first adhesive layer (32) is disposed between said fuel permeation barrier layer (34) and said inner layer (30).

18. A fuel permeation barrier fuel tank (10) as set forth in claim 17 including a second adhesive layer (36) disposed between said regrind layer (38) and said fuel permeation barrier layer (34).

19. A fuel permeation barrier fuel tank (10) as set forth in claim 12 wherein said inner layer (30) and said outer layer (40) have a thickness greater than said fuel permeation barrier layer (34).

20. A fuel tank (10) for a vehicle comprising:
a tank shell (12) having a wall formed from a plurality of layers (30,32,34,36,38,40);
said layers (30,32,34,36,38,40) comprising at least an inner layer (30) and an outer layer (40) comprising a polyethylene material; and
a fuel permeation barrier layer (34) comprising a polyethylene tereptphalate material disposed between said outer layer (40) and said inner layer (30), wherein said inner layer (30) and said outer layer (40) have a thickness greater than said fuel permeation barrier layer (34).
